# EUROPEAN PATENT SPECIFICATION

(11) **EP 3 494 624 B1**
(45) Date of publication and mention of the grant of the patent: **07.06.2023**
(21) Application number: 17837635.6
(22) Date of filing: 02.08.2017
(51) Int. Cl.: H02J 3/38, H02J 3/00

(54) **DISTRIBUTED RESOURCE ELECTRICAL DEMAND FORECASTING SYSTEM AND METHOD**
SYSTEM UND VERFAHREN ZUR VORHERSAGE DES ELEKTRISCHEN BEDARFS EINER VERTEILTEN RESSOURCE
SYSTÈME ET PROCÉDÉ PERMETTANT DE PRÉVOIR LA DEMANDE ÉLECTRIQUE DE RESSOURCES DISTRIBUÉES

(30) Priority: 03.08.2016 US 201662370515 P
(43) Date of publication of application: 12.06.2019
(73) Proprietor: Zeco Systems Inc., Los Angeles, California 90028 (US)
(72) Inventor: FRASHER, James, Glendora, California 91741 (US)
(74) Representative: Carter, Stephen John
(86) International application number: PCT/US2017/045177
(87) International publication number: WO 2018/026964

(56) References cited:
- WO-A1-2012/145563
- WO-A1-2014/109020
- CN-A- 104 269 849
- US-A1- 2011 035 073
- US-A1- 2011 035 073
- US-A1- 2014 303 935
- US-A1- 2015 012 144
- US-A1- 2015 094 874
- US-A1- 2015 186 904
- US-A1- 2015 207 319
- US-B1- 8 457 802

## Description

### TECHNICAL FIELD

This disclosure generally relates to a method of using a distributed network of systems and sensors. More particularly, the disclosure generally relates to a method of using a distributed network of systems and sensors to collect and monitor data that may be used to predict and preempt electrical grid demand events.

### DESCRIPTION OF THE RELATED ART

Smart grid technologies such as building automation, battery energy storage, fuel cells, smart EV charging, and renewable generation may all benefit from multiple revenue streams. These individual technologies or combinations of technologies are used to meet the needs of several applications at the same time. Some examples of these applications include: (1) site services such as demand reduction, (2) grid services like frequency regulation, and (3) emergency services such as back-up power. Each of these applications may have a monetary (and/or efficiency) value that varies significantly over time. This is particularly true in the case of grid services where the value of an application is not based on the impact of any one site, but rather the needs of the overall electrical grid. The value of grid services may be communicated by an Independent System Operator (ISO) or utility using a price signal such as OpenADR or through initiating load reduction events. The fluctuations in value and timing of these grid services may be unrelated to the site and emergency service applications. Thus, to properly maximize the performance of a single site, the site should be able to balance the value of local services with the services being provided to the grid.

The value of grid services is not the same across the entire electrical system. At any given time, a Sub-Load Aggregation Point may be operating at a high energy price due to elevated demand while a Sub-Load Aggregation Point in a nearby region may have a negative energy price due to over generation. Grid level trends and consumption data are not sufficient to model the price of energy within a Sub-Load Aggregation Point.

Prior systems have focused on receiving notification of an event, determining the optimal disposition for operating the distributed resources, and meeting the requirements of the power distribution event through the most effective techniques available. This method fails to utilize data from the distributed resources prior to the notification to anticipate the upcoming event and therefore may make sub-optimal decisions prior to the event. The result is reduced performance of the overall distributed system.

The prior systems have not taken advantage of control system and sensor data of the distributed resources to anticipate events. As such, the existing art is limited to event notification and reaction.

Notably, all of the subject matter discussed in this section is not necessarily prior art and should not be assumed to be prior art merely as a result of its discussion in this section. Accordingly, any recognition of problems in the prior art discussed in this section or associated with such subject matter should not be treated as prior art unless expressly stated to be prior art. Instead, the discussion of any subject matter in this section should be treated as part of the technical solution to a particular technical problem, which in and of itself may also be inventive.

US2015012144A1 describes an apparatus in which a processor cooperates with a real-time controller and is structured to input current measurements of information from a hybrid power system and hybrid dynamics information including continuous dynamics and discrete time dynamics that model the hybrid power system. The processor provides online optimization of the hybrid power system based upon the input, and outputs a power flow reference and a number of switch controls to the real-time controller based upon the online optimization. The processor is further structured to provide at least one of: real-time forecasts or real-time prediction of future information operatively associated with the hybrid power system as part of the input, and real-time processing of the online optimization.

US2011035073A1 describes a system that communicates with an energy provider to receive energy provider data,and calculate a cost of service or avoided cost using individualized energy usage data and a system generation cost at a nearest bus. The system may also forecast individualized demand by end-use, individualized demand by location, energy prices, or energy costs. The system may optimize energy distribution, energy use, cost of service, or avoided cost using the forecasted individualized demand by end-use, the forecasted individualized demand by location, the forecasted energy prices, and the forecasted energy costs.

### BRIEF SUMMARY

The invention provides a method of collecting and analyzing data from distributed resources to predict upcoming energy events on an electrical grid, the method being as set forth in claim 1. The invention also provides a distributed resource electrical demand system as set forth in claim 13.

In one aspect of some embodiments, the collected data from the distributed network of control systems and/or sensors includes voltage data, frequency data, power data, temperature data, or combinations thereof. In another aspect of some embodiments, the analysis on the collected data is performed in real-time. In still another aspect of some embodiments, the collected data is stored at a central server. In yet another aspect of some embodiments, the analysis on the collected data is performed in the central server.

Continuing, in one aspect of some embodiments, the collected data is stored at the distributed resources. In another aspect of some embodiments, the analysis on the collected data is performed in the distributed resources. In still another aspect of some embodiments, the sensors include a temperature sensor, a voltage sensor, a light sensor, a humidity sensor, a power sensor, or combinations thereof. In yet another aspect of some embodiments, the data reporting shows how much sunlight is being measured in a given region.

In one embodiment, the method further includes comparing actual temperatures and sunlight data collected from the network of distributed resources in real time to forecasted weather; and determining if there is an elevated change of an energy price and/or supply change due to large deviations from the forecasted weather. In another aspect of one embodiment, the measurements across a Sub-Load Aggregation Point are analyzed to predict changes in an energy price using a combination of measurements that include: data showing a gradual reduction in sunlight from East to West across a Sub-LAP, data showing a day that is hotter than a forecast predicted, and data showing voltage levels lagging across an entire network.

Features and advantages will become apparent from the following detailed description, taken in conjunction with the accompanying drawings, which illustrate by way of example, the features of the various embodiments.

### BRIEF DESCRIPTION OF THE SEVERAL VIEWS OF THE DRAWINGS

The accompanying drawings, which are included as part of the present specification, illustrate various embodiments and, together with the general description given above and the detailed description of the various embodiments given below, serve to explain and teach the principles described herein.
Figure 1 is distribution map showing distributed resources operating within Sub-LAPs.
Figure 2 is a data collection network relying on a central server to aggregate all data.
Figure 3 is a distributed computing model to aggregate data without the need of a central node.
Figure 4 is an expanded view of a sample distributed resource node showing various types of data collection methods and sensors.
Figure 5 is a graphical representation of translating data from the distributed resources into a predicted likelihood of a demand response event.

Notably, the figures are not necessarily drawn to scale and elements of similar structures or functions are generally represented by like reference numerals for illustrative purposes throughout the figures. The figures or text shows examples of possible implementations of the distributed resource electrical demand forecasting system, however the teachings are applicable to other implementations without deviating from the present disclosure. The figures are only intended to facilitate the description of the various embodiments described herein. The figures do not describe every aspect of the teachings disclosed herein and do not limit the scope of the claims.

### DETAILED DESCRIPTION

Each of the features and teachings disclosed herein may be utilized separately or in conjunction with other features and teachings to provide a system and method of implementing a distributed resource electrical demand forecasting system and method. Representative examples utilizing many of these additional features and teachings, both separately and in combination, are described in further detail with reference to the attached figures. This detailed description is merely intended to teach a person of skill in the art further details for practicing aspects of the present teachings and is not intended to limit the scope of the claims. Therefore, combinations of features disclosed above in the detailed description may not be necessary to practice the teachings in the broadest sense, and are instead taught merely to describe particularly representative examples of the present teachings.

In the description below, for purposes of explanation only, specific nomenclature is set forth to provide a thorough understanding of the present disclosure. However, it will be apparent to one skilled in the art that these specific details are not required to practice the teachings of the present disclosure.

Some portions of the detailed descriptions herein are presented in terms of algorithms and symbolic representations of operations on data bits within a computer memory. These algorithmic descriptions and representations are used by those skilled in the data processing arts to effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the below discussion, it is appreciated that throughout the description, discussions utilizing terms such as "processing," "computing," "calculating," "determining," "displaying," or the like, refer to the action and processes of a computer system, or similar electronic computing device, that manipulates and transforms data represented as physical (electronic) quantities within the computer system's registers and memory devices into other data similarly represented as physical quantities within the computer system memory devices or registers or other such information storage, transmission or display devices.

Moreover, the various features of the representative examples and the dependent claims may be combined in ways that are not specifically and explicitly enumerated in order to provide additional useful embodiments of the present teachings. It is also expressly noted that all value ranges or indications of groups of entities disclose every possible intermediate value or intermediate entity for the purpose of an original disclosure, as well as for the purpose of restricting the claimed subject matter. It is also expressly noted that the dimensions and the shapes of the components shown in the figures are designed to help understand how the present teachings are practiced, but not intended to limit the dimensions and the shapes shown in the examples.

In the following description, certain specific details are set forth in order to provide a thorough understanding of various disclosed embodiments. However, one skilled in the relevant art will recognize that embodiments may be practiced without one or more of these specific details, or with other methods, components, materials, and the like. In other instances, well-known structures associated with servers, networks, displays, media handling, computers and/or processor/control systems have not been shown or described in detail to avoid unnecessarily obscuring descriptions of the embodiments.

Unless otherwise indicated, the functions described herein may be performed by executable code and instructions stored in a computer readable medium and running on one or more processor-based systems. However, solid state machines and/or hardwired electronic circuits may also be utilized. Further, with respect to the example processes described herein, not all of the process states need to be reached, nor do the states have to be performed in the illustrated order. Further, certain process states that are illustrated as being serially performed may be performed in parallel.

Similarly, unless expressly stated otherwise, while certain embodiments may refer to a Personal Computer ("PC") system or data device, other computer or electronic systems may be used as well, such as, without limitation, an interactive television, a network-enabled personal digital assistant ("PDA"), a network game console, a networked entertainment device, a smartphone (*e.g.*, with an operating system and on which a user may install applications) and the like.

In addition, while certain user inputs or gestures are described as being provided via phone key-presses, data entry via a keyboard, or by clicking a computer mouse or button, optionally, user inputs may be provided using other techniques, such as by voice or otherwise. The example screen layouts, appearance, and terminology as depicted and described herein, are intended to be illustrative and exemplary, and in no way limit the scope of the invention as claimed.

The terms, "for example," "*e.g*.," "in one/another aspect," "in one/another scenario," "in one/another version," "in some configurations" "in some implementations," "preferably," "usually," "typically," "may," and "optionally," as used herein, are intended to be used to introduce non-limiting embodiments. Unless expressly stated otherwise, while certain references are made to certain example system components or services, other components and services may be used as well and/or the example components may be combined into fewer components and/or divided into further components. The terms, "member" and "user," are used interchangeably. Members and users are subscribed to or enrolled in a network service or network of users.

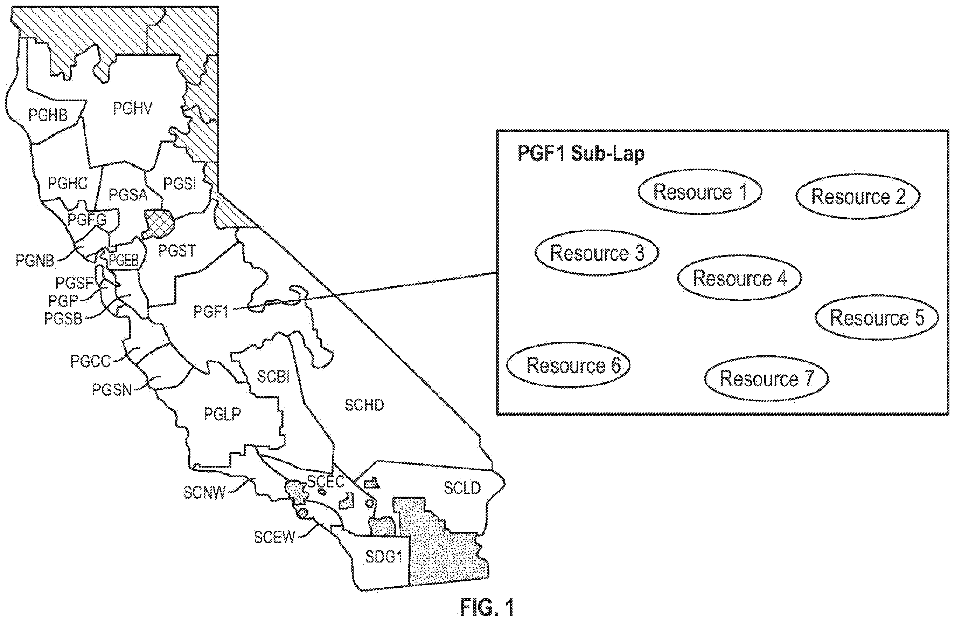

Referring now to Figures 1-5, various aspects of the distributed resource electrical demand forecasting system and method are shown. Notably, distributed resources used by the distributed resource electrical demand forecasting system and method may be active elements such as energy storage, building automation systems, or renewable generation. Additionally or alternatively, distributed resources used by the distributed resource electrical demand forecasting system and method may also be passive sensors that are installed for the specific purpose of collecting data and communicating information to the distributed network.

As shown in Figure 1, Sub-Load Aggregation Points (Sub-LAPs) vary in geographic size and population density on the electrical grid. Sub-LAPs are areas within default load aggregation points (LAPs) of the electrical grid that group buses with similar grid impacts. Sub-LAPs may be used for the publication of locational marginal prices. Sub-LAPs are also used to aggregate demand response and distributed energy resources within Sub-LAPs. Additionally, Sub-LAPs enable more precise reflection of congestion costs for congestion revenue rights than the default load aggregation points.

A well distributed network of resources is preferred for predicting demand response events. The size and population centers of a Sub-LAP may impact the distribution and concentration of resources. However, available data may still be used to predict demand response events.

In one aspect of the distributed resource electrical demand forecasting system and method, sunlight, voltage, and temperature sensors provide useful data for predicting demand response events and are desirable components as part of each resource. Notably, the distributed resource electrical demand forecasting system and method functions with many different types of sensors. As such, no specific sensor is required to be part of any resource as long as sensor data is provided. In this regard, the term sensor is not intended to be limiting to any particular set of measurement tools. Any information that may be collected from a distributed resource may add value and accuracy to the demand response forecast.

In some embodiments of the distributed resource electrical demand forecasting system and method, the resources communicate over a cellular data network. In other embodiments of the distributed resource electrical demand forecasting system and method, the resources communicate (either additionally or alternatively) over other wireless networks and/or wired networks. In this regard, a communication mechanism that enables resources to speak directly with each other or a central server may be utilized in various implementations of the distributed resource electrical demand forecasting system and method.

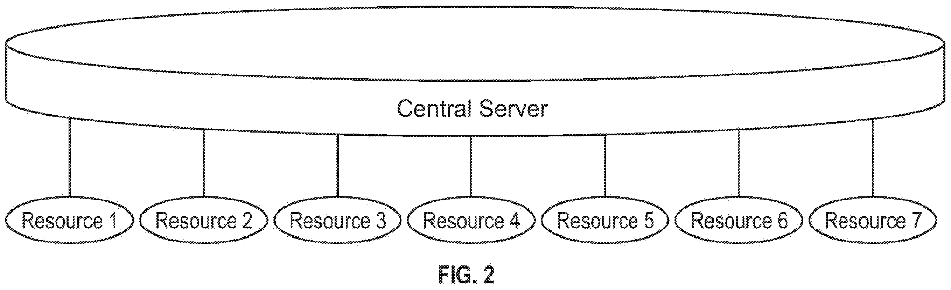

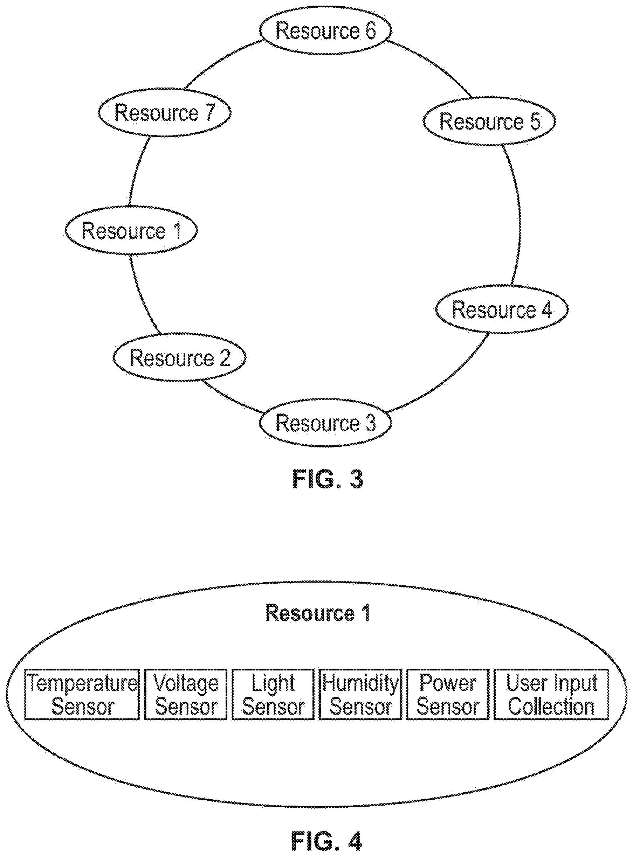

Referring now to Figure 2, an embodiment of the distributed resource electrical demand forecasting system and method is shown in which data collection and event prediction is performed at a central server and communicated to the distributed resources via a communication network. In some embodiments, the central server includes one or more memory devices and one or more processors. The data collection and event prediction is performed using executable code and instructions stored in the one or more memory devices, executed by the one or more processors, and running on one or more processor-based systems. However, as shown in Figure 3, in other embodiments of the distributed resource electrical demand forecasting system and method, calculations may be performed by the distributed resources themselves. Notably, the distributed resources also include one or more memory devices and one or more processors, in which the one or more processors execute instructions stored in the one or more memory devices. In some embodiments of the distributed resource electrical demand forecasting system and method, the distributed resources are in a Peer-to-Peer network configuration such that the distributed resources are directly connected via the communication network instead of being connected through the central server. In this regard, the location of the data collection and methods of calculation vary between different embodiments of the distributed resource electrical demand forecasting system and method, and are not limited by the network topology.

Referring now to Figure 4, an embodiment of a resource in the distributed resource electrical demand forecasting system and method is shown. Specifically, in this embodiment, Resource 1 includes a temperature sensor, a voltage sensor, a light sensor, a humidity sensor, a power sensor, and a user input collection. In some embodiments, each of these sensors also includes one or more memory devices and one or more processors, in which the one or more processors execute instructions stored in the one or more memory devices. In other resources in the distributed resource electrical demand forecasting system and method, a larger or smaller number of sensors may be included. For example, in one embodiment Resource 1 includes one sensor, Resource 2 includes four sensors, Resource 3 includes six sensors, Resource 4 includes three sensors, and the like. In another embodiment of the distributed resource electrical demand forecasting system and method, all of the resources include the same number of sensors.

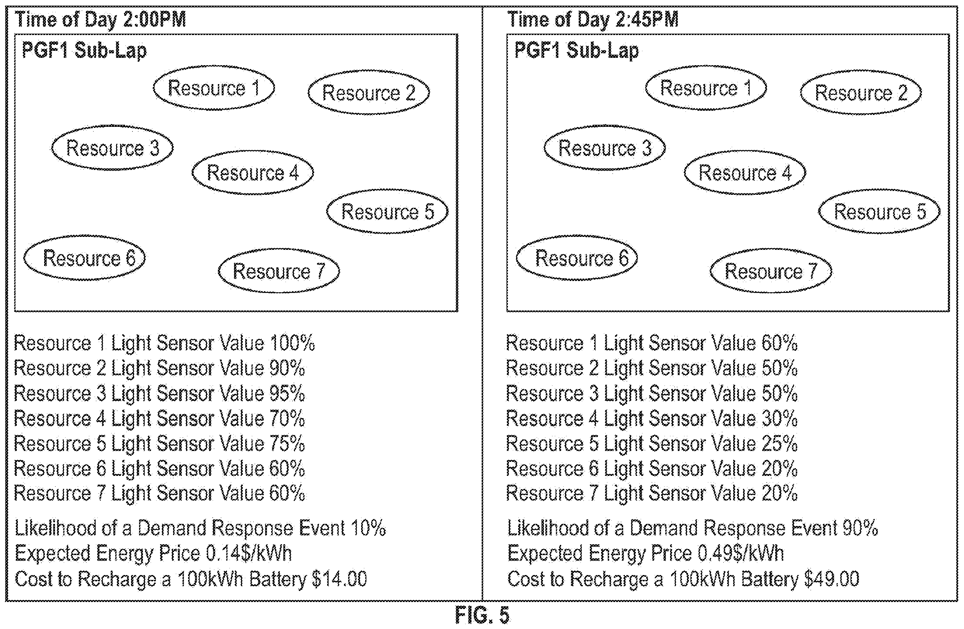

Figure 5 shows data reporting and depicts a system of distributed sensors gathering data. The data reporting shows how much sunlight is being measured in a given region. This is an indication of how much solar generation may be contributing to the local electrical grid. In the example shown in Figure 5, the sunlight is decreasing over time. More specifically, based on the sensor distribution, it may be determined that sunlight is decreasing in a specific direction (over time). The gradient represented by this data shows that sunlight is lowest in the south and that the reduction in light is occurring in the Northern region later in the day. Many events may account for sunlight reduction such as clouds, dust storms, wild fires, and the like. Notably, some reductions in sunlight may be well understood and easily forecasted like cloudiness, but wild fires may erupt anywhere and are unpredictable.

In accordance with the invention, the distributed resource electrical demand forecasting system and method is able to take measurements from all of the nodes across a Sub-LAP and model the drop of available sunlight, predict the scale of the drop off across the entire region, and model the speed at which the interruption is spreading. Based on those measurements, along with measurements from the other sensors in the network (voltage, temperature, power consumption, and the like), the likelihood of a demand response event or sudden change in the price and supply of energy may be anticipated. By knowing how the electricity generation and consumption from different regions are changing based on real-time data reporting on local energy, the distributed resource electrical demand forecasting system and method is able to modify management strategies to minimize the overall cost of energy and maximize energy efficiency (*e.g.*, by targeting time periods with large energy supplies that were identified using the distributed resource electrical demand forecasting system and method for fulfilling energy demands).

In one implementation of the distributed resource electrical demand forecasting system and method, a refrigerated warehouse in the northern section of the Sub-LAP may choose to reduce the temperature in their facility while their solar is still generating at full power (2:00PM). The refrigerated warehouse made this decision based on knowledge from the distributed resource electrical demand forecasting system and method that the supply of solar generated energy will be reduced later in the afternoon, and thus, the real-time price of energy for the refrigerated warehouse will increase later in the afternoon when the refrigerated warehouse would otherwise be acquiring energy. Additionally, a nearby site with an energy storage system may begin to conserve energy, which would normally be used to reduce demand charges, in anticipation of a higher value demand response event being called by the local electric utility or ISO.

In another embodiment, the measurements and data from distributed resources may also be used by the distributed resource electrical demand forecasting system and method to anticipate drops in prices, increases in supply, or the end of demand response events. For example, if the sunlight measured at nearby nodes is increasing and the gradient across the region shows that the sunlight at a specific node is set to rise, then it is expected that solar generation output will increase and the cost of energy will drop over time. Accordingly, a battery system may delay recharging based on this information to reduce to cost of an operation. Additionally or alternatively, a high energy process at a node may be delayed until the anticipated price drop occurs, using this information from the distributed resource electrical demand forecasting system and method.

In accordance with the invention, line voltage may is monitored to provide an early indicator for potential grid constraints, demand response events, and increased real time price of energy. In this regard, line voltage sagging at an individual site may be caused by very high local load or by the physical location of the site relative to the sub-station. Voltage sag across a Sub-LAP may be caused by a drop off in renewable generation, mechanical problems at a nearby power plant, or abnormally high demand across the region.

By using the distributed resource electrical demand forecasting system and method, the voltages across a region may be monitored and historical data may be saved. Using the historical data in conjunction with real time data, the distributed resource electrical demand forecasting system and method separates line voltage drop at a single site from line voltage drops that are impacting an entire Sub-LAP. When the voltage is sagging across an entire Sub-LAP, the drop is usually corrected by calling for a demand response event or elevating the price of energy to help stabilize the electric grid. Notably, sites operating on the distributed resource electrical demand forecasting system and method network may begin conserving energy and preparing for these events in advance of their occurrence. If the voltage continues to lag across the Sub-LAP, the distributed resource electrical demand forecasting system and method may begin to store excess energy in local batteries in anticipation of a grid black out and the need for back-up power.

Referring now to still another aspect of the distributed resource electrical demand forecasting system and method, "day ahead" demand response events are often called by utilities based on weather forecasts. However, if the actual weather significantly deviates from the forecast weather, then the grid may experience shortfalls of energy supply or over energy generation. In this situation, the distributed resource electrical demand forecasting system and method may perform calculations that compare the actual temperatures and sunlight data collected from the distributed network of systems in real time to the forecasted weather. Where large deviations from the expected temperature are found, the system may determine if there is an elevated (or decreased) likelihood of a price event.

The examples described above illustrate one type of measurements across a Sub-LAP to predict changes in the price of energy using the distributed resource electrical demand forecasting system and method. Most embodiments of the distributed resource electrical demand forecasting system and method will employ calculations made using a combination of measurements (*e.g.*, from multiple different types of sensors and multiple resource locations). In one example, a combination of measurements include: (1) a gradual reduction in sunlight from East to West across a Sub-LAP (2) on a day that is hotter than the day ahead forecast predicted, and (3) where voltage levels are lagging across the entire network. Using this combination of measurements, the distributed resource electrical demand forecasting system and method predict a high probability of a demand event and provide energy acquisition timing information. The accuracy and reliability of the distributed resource electrical demand forecasting system and method is built on utilizing all available data from several nodes across the operating region.

Various aspects of the systems, methods, functions, steps, features and the like corresponding thereto disclosed herein may be implemented on one or more computer systems using hardware, software, firmware, circuits, or combinations thereof. Hardware, software, firmware, and circuits respectively refer to any hardware, software, firmware, or circuit component. Computer systems referred to herein may refer to any computing device and vice versa (*e.g.*, smartphone, mobile computing device, personal data assistant, tablet computer, laptop computer, desktop computer, other computing device, and the like). For example, each computer system or computing device in the systems described herein or any embodiment of a system disclosed herein may utilize one or more of the following components: a single-core or multi-core hardware processor (*e.g*., central processing unit or graphics processing unit) on which software instructions are executed (*e.g.*, instructions corresponding to an operating system, an application program, an interpreter such as a virtual machine, or a compiler); a memory associated with and in connection with the hardware processor such as cache or other system memory that stores software instructions or other data the hardware processor may access for processing; an input device (*e.g.*, mouse, keyboard, touchscreen, and the like); an output device (*e.g.*, display, touchscreen, printer, and the like); a network or communication interface that enables the computer system to communicate over a network or communication protocol; and an application program having corresponding software instructions that are executable by a hardware processor. Connections between different computer systems and connections between different computer system components may be wired or wireless.

Virtualization computing techniques, cloud computing techniques, web application/website computing techniques, traditional and adaptive streaming techniques, and other computing techniques may be implemented by any embodiment of a system disclosed herein to enable and/or enhance the teachings described herein. For example, in a cloud computing embodiment, one or more servers (*i.e.*, one or more computer systems) may store and execute software instructions corresponding to an application program based on input data received from client devices. In response to the input data received, the application program is executed accordingly, which results in graphical data being processed and output to the client devices for display on a display, such as a touch screen on a smartphone or tablet computer.

As another example, in a web application or website embodiment, data representative of a user input may be transmitted to a server (*i.e.,* a computer system) hosting the website for processing and storage in memory. In an application program embodiment, the application may be stored and executed locally on a user's computer system. In other embodiments, one or more components of the application program may be stored and executed on a server and the user's computer system. For example, a user may download the application program from an app store for an Android computing device, Blackberry computing device, Apple computing device, Windows computing device, Samsung computing device, other computing device, and the like. Execution of the application program on the user's computing device may require that the device transmit and receive data to and from one or more computing devices such as a server or other user's computing device. For example, an application may be downloaded from a server to a mobile device. Upon installation, the mobile device may communicate with a server.

One or more embodiments of the systems disclosed herein may utilize streaming technology. Streaming data enables data to be presented to the user of the client device while the client device receives data from the server. Streaming data from servers to client devices (*e.g*., computing devices operated by users) over a network is typically limited by the bandwidth of the network, or alternatively, the physical layer net bitrate. Traditional streaming protocols, such as RTSP (Real-Time Streaming Protocol), MS-WMSP (Windows Media HTTP Streaming Protocol), and RTMP (Real-Time Messaging Protocol) may be implemented, which essentially send data in small packets from the server to the client device in real-time at the encoded bitrate of the data. Adaptive streaming may also be implemented. Adaptive streaming almost exclusively relies on HTTP for the transport protocol. Similar to traditional streaming, data is encoded into discrete packets of a particular size; however, the source data is encoded at multiple bitrates rather than a single bitrate. The data packets corresponding to the same data encoded at different bitrates are then indexed based on the bitrate in memory. This streaming method works by measuring, in real-time, the available bandwidth and computer capacity of the client device, and adjusts which indexed data packet to transfer based on the encoded bitrate.

One or more aspects of the systems disclosed herein may be located on (*i.e*., processed, stored, executed, or the like; or include one or more hardware or software components) a single computer system or may be distributed among a plurality of computer systems attached by one or more communication networks (*e.g*., internet, intranet, a telecommunications network, and the like). One or more components of a computer system may be distributed across one or more computer systems in communication with the computer system over a communication network. For example, in some embodiments, the systems disclosed herein may utilize one or more servers (*i.e*., one or more computer systems dedicated for a particular purpose in the system) that may be dedicated to serve the needs of one or more other computer systems or components across a communication network and/or system bus. The one or more servers may provide a central processing location for one or more aspects of the systems disclosed herein.

Again, various aspects of the systems, methods, function, and steps corresponding thereto disclosed herein may be implemented on one or more computer systems using hardware, software, firmware, or combinations thereof. Those of ordinary skill in the art will appreciate that one or more circuits and/or software may be used to implement the system and methods described herein. Circuits refer to any circuit, whether integrated or external to a processing unit such as a hardware processor. Software refers to code or instructions executable by a computing device using any hardware component such as a processor to achieve the desired result. This software may be stored locally on a processing unit or stored remotely and accessed over a communication network.

As disclosed herein, a processor or hardware processor may refer to any hardware processor or software processor. A software processor may include or otherwise constitute an interpreter that is executed by a corresponding hardware processor. A computer system according to any embodiment disclosed herein is configured to perform any of the described functions related to the various embodiments of the systems disclosed herein.

As disclosed herein, any method, function, step, feature, or result may be considered a module that may include software instructions that cause, when executed by a computing device, the desired method, function, step, feature, or result. Execution by a computing device includes execution by any hardware component (e.g., CPU, GPU, network interface, integrated circuits, other hardware components, and the like) of the computing device such as a hardware processor. Any module may be executed by a computing device (*e.g.*, by a processor of the computing device). Any method, function, step, feature, result, and the like disclosed herein may be implemented by one or more software modules whether explicitly described or not. Individual components within a computing device may work together to accomplish a desired method, function, step, feature, or result. For example, a computing device may receive data and process the data. A simple example would be that a network interface receives the data and transmits the data over a bus to a processor.

Various aspects of the systems disclosed herein may be implemented as software executing in a computer system. The computer system may include a central processing unit (*i.e.,* a hardware processor) connected to one or more memory devices, a graphical processing unit, input devices such as a mouse and keyboard, output devices such as speakers and a display, a network interface to connect to one or more other computer systems (*e.g*., one or more computer systems configured to provide a service that functions as a database), an operating system, a compiler, an interpreter (*i.e*., a virtual machine), and the like. The memory may be used to store executable programs and data during operation of the computer system. The executable programs may be written in a high-level computer programming language, such as Java or C++. Of course, other programming languages may be used since this disclosure is not limited to a specific programming language or computer system. Further, it is to be appreciated that the systems and methods disclosed herein are not limited to being executed on any particular computer system or group of computer systems.

Some methods, functions, steps, or features have been described as being executed by corresponding software by a processor. It is understood than any methods, functions, steps, features, or anything related to the systems disclosed herein may be implemented by hardware, software (*e.g*., firmware), or circuits despite certain methods, functions, steps, or features having been described herein with reference to software corresponding thereto that is executable by a processor to achieve the desired method, function, or step. It is understood that software instructions may reside on a non-transitory medium such as one or more memory devices accessible to one or more processors in the systems disclosed herein. For example, where a computing device receives data, it is understood that the computing device processes that data whether processing the data is affirmatively stated or not. Processing the data may include storing the received data, analyzing the received data, and/or processing the data to achieve the desired result, function, method, or step. It is further understood that input data from one computing device or system may be considered output data from another computing device or system, and vice versa. It is yet further understood that any methods, functions, steps, features, results, or anything related to the systems disclosed herein may be represented by data that may be stored on one or more memory devices, processed by one or more computing devices, received by one or more computing devices, transmitted by one or more computing devices, and the like. The various embodiments and examples described herein are provided by way of illustration only and should not be construed to limit the claimed invention, nor the scope of the various embodiments and examples. Those skilled in the art will readily recognize various modifications and changes that may be made to the claimed invention without following the example embodiments and applications illustrated and described herein, and without departing from the scope of the claimed invention, which is set forth in the following claims. In addition, various embodiments may be combined. Therefore, reference to an embodiment, one embodiment, in some embodiments, in other embodiments, and the like does not preclude one or more methods, functions, steps, features, results, hardware implementations, or software implementations of different embodiments from being combined. Further, reference to an embodiment, one embodiment, in some embodiments, in other embodiments, examples, and the like provides various aspects that may or may not be combined with those of one or more different embodiments and/or examples.

## Claims

1. A method of collecting and analyzing data from distributed resources in a distributed resource electrical demand system to predict upcoming energy events on an electrical grid, the method comprising:
collecting data from a network of distributed resources that includes control systems and sensors, the collected data stored in one or more memory devices;
performing, using one or more processors, analysis on the collected data stored in the one or more memory devices;
modelling electrical grid conditions at a sub-load aggregation point of the electrical grid;
determining values of stored energy, energy generation, and load curtailment in advance of market signals using the modelled electrical grid conditions;
predicting a demand pricing distribution event and forecasting a change in price, supply, or both; and
executing a modification in electrical consumption based on the predicted demand pricing distribution event;
**characterized in that**
the distributed resource electrical demand system takes measurements from the sensors in the nodes across a sub-load aggregation point and predicts a reduction of available sunlight, a scale of the reduction across an entire region, and a speed and direction at which the reduction is spreading using the sensor measurements; and
the method further comprises monitoring line voltage to predict grid constraints, demand response events, increased real time price of energy, or combinations thereof, wherein historical data is used in conjunction with real time data to separate a line voltage drop at a single site from a line voltage drop that is impacting an entire Sub-Load Aggregation Point.

2. The method of claim 1, wherein the collected data from the distributed network of control systems and/or sensors includes voltage data, frequency data, power data, temperature data, or combinations thereof.

3. The method of claim 1, wherein the analysis on the collected data is performed in real-time.

4. The method of claim 1, wherein the collected data is stored at a central server.

5. The method of claim 4, wherein the analysis on the collected data is performed in the central server.

6. The method of claim 1, wherein the collected data is stored in the distributed resources.

7. The method of claim 4, wherein the analysis on the collected data is performed in the distributed resources.

8. The method of claim 1, wherein the sensors include a temperature sensor, a voltage sensor, a light sensor, a humidity sensor, a power sensor, or combinations thereof.

9. The method of claim 1, wherein the data reporting shows how much sunlight is being measured in a given region, and wherein, based on sensor distribution, the sunlight data reporting enables a determination that sunlight is decreasing in a specific direction over time.

10. The method of claim 1, wherein line voltage sagging occurs at an individual site due to very high local load at physical location of a site relative to a sub-station, or combinations thereof.

11. The method of claim 1, further comprising:
comparing actual temperatures and sunlight data collected from the network of distributed resources in real time to forecasted weather; and
determining if there is an elevated change of an energy price and/or supply change due to large deviations from the forecasted weather.

12. The method of claim 1, wherein measurements across a Sub-Load Aggregation Point are analyzed to predict changes in an energy price using a combination of measurements that include: data showing a gradual reduction in sunlight from East to West across a Sub-Load Aggregation Point, data showing a day that is hotter than a forecast predicted, and data showing voltage levels lagging across an entire network.

13. A distributed resource electrical demand system for predicting upcoming energy events on an electrical grid, the system comprising:
a distributed network that interfaces with the electrical grid;
one or more processors; and
a memory device storing a set of instructions that, when executed by the one or more processors, causes the one or more processors to:
receive data from a network of distributed resources that include control systems and/or sensors, the received data stored in one or more memory devices;
perform, using the one or more processors, analysis on the received data stored in the one or more memory devices;
model electrical grid conditions at a sub-load aggregation point of the electrical grid;
determine a value of stored energy, energy generation, and load curtailment in advance of market signals using the modelled electrical grid conditions; and
predict demand pricing distribution events and forecasting changes in price, supply, or both; and
execute a modification in electrical consumption based on the predicted demand pricing distribution event;
**characterized in that** the set of instructions, when executed by the one of more processors, further causing the one or more processors to:
take measurements from the sensors in the nodes across a sub-load aggregation point and predict a reduction of available sunlight, a scale of the reduction across an entire region, and a speed and direction at which the reduction is spreading using the sensor measurements; and
monitor line voltage to predict grid constraints, demand response events, increased real time price of energy, or combinations thereof, wherein historical data is used in conjunction with real time data to separate a line voltage drop at a single site from a line voltage drop that is impacting an entire Sub-Load Aggregation Point.

14. The system of claim 13, wherein the data reporting shows how much sunlight is being measured in a given region, and wherein, based on sensor distribution, the sunlight data reporting enables a determination that sunlight is decreasing in a specific direction over time.

15. The system of claim 13, wherein line voltage sagging occurs at an individual site due to very high local load at physical location of a site relative to a sub-station, or combinations thereof.

## Patentansprüche

1. Verfahren zum Erfassen und Analysieren von Daten von verteilten Ressourcen in einem elektrischen Bedarfssystem mit verteilten Ressourcen, um bevorstehende Energieereignisse in einem elektrischen Netz vorherzusagen, wobei das Verfahren Folgendes umfasst:
Erfassen von Daten von einem Netzwerk verteilter Ressourcen, das Steuersysteme und Sensoren umfasst, wobei die erfassten Daten in einem oder mehreren Speichervorrichtungen gespeichert werden;
Vornehmen, unter Verwendung von einem oder mehreren Prozessoren, einer Analyse der in der einen oder den mehreren Speichervorrichtungen gespeicherten erfassten Daten;
Modellieren von Bedingungen im elektrischen Netz an einem Sub-Lastaggregationspunkt des elektrischen Netzes;
Bestimmen von Werten von gespeicherter Energie, Energieerzeugung und Lasteinschränkung vor Marktsignalen unter Verwendung der modellieren Bedingungen im elektrischen Netz;
Vorhersagen eines Bedarfspreisbestimmungs-Verteilungsereignisses und Prognostizieren einer Änderung von Preis, Versorgung oder beidem; und
Ausführen einer Veränderung des elektrischen Verbrauchs basierend auf dem vorhergesagten Bedarfspreisbestimmungs-Verteilungsereignis;
**dadurch gekennzeichnet, dass**
das elektrische Bedarfssystem mit verteilten Ressourcen Messwerte von den Sensoren in den Knoten über einen Sub-Lastaggregationspunkt hinweg heranzieht und eine Verringerung des verfügbaren Sonnenlichts, eine Größenordnung der Verringerung über eine gesamte Region hinweg und eine Geschwindigkeit und eine Richtung, mit der sich die Verringerung ausbreitet, unter Verwendung der Sensormesswerte vorhersagt; und
das Verfahren ferner das Überwachen der Netzspannung umfasst, um Netzeinschränkungen, Bedarfsreaktionsereignisse, einen erhöhten Echtzeit-Energiepreis oder Kombinationen davon vorherzusagen, wobei historische Daten in Verbindung mit Echtzeitdaten verwendet werden, um einen Netzspannungsabfall an einem einzelnen Standort von einem Netzspannungsabfall, der sich auf einen gesamten Sub-Lastaggregationspunkt auswirkt, zu trennen.

2. Verfahren nach Anspruch 1, wobei die erfassten Daten von dem verteilten Netzwerk von Steuersystemen und/oder Sensoren Spannungsdaten, Frequenzdaten, Leistungsdaten, Temperaturdaten oder Kombinationen davon umfassen.

3. Verfahren nach Anspruch 1, wobei die Analyse der erfassten Daten in Echtzeit vorgenommen wird.

4. Verfahren nach Anspruch 1, wobei die erfassten Daten in einem zentralen Server gespeichert werden.

5. Verfahren nach Anspruch 4, wobei die Analyse der erfassten Daten in dem zentralen Server vorgenommen wird.

6. Verfahren nach Anspruch 1, wobei die erfassten Daten in den verteilten Ressourcen gespeichert werden.

7. Verfahren nach Anspruch 4, wobei die Analyse der erfassten Daten in den verteilten Ressourcen vorgenommen wird.

8. Verfahren nach Anspruch 1, wobei die Sensoren einen Temperatursensor, einen Spannungssensor, einen Lichtsensor, einen Feuchtigkeitssensor, einen Leistungssensor oder Kombinationen davon umfassen.

9. Verfahren nach Anspruch 1, wobei die Datenmeldung zeigt, wie viel Sonnenlicht in einer gegebenen Region gemessen wird, und wobei die Sonnenlichtdatenmeldung basierend auf der Sensorverteilung eine Bestimmung ermöglicht, dass Sonnenlicht in einer spezifischen Richtung mit der Zeit abnimmt.

10. Verfahren nach Anspruch 1, wobei an einem einzelnen Standort ein Spannungsabsinken infolge sehr hoher lokaler Last an dem physischen Ort eines Standorts relativ zu einer Umspannstation oder Kombinationen davon auftritt.

11. Verfahren nach Anspruch 1, ferner umfassend:
Vergleichen von von dem Netzwerk verteilter Ressourcen her erfasster Ist-Temperaturen und -Sonnenlichtdaten in Echtzeit mit prognostizierten Wetter; und
Bestimmen, ob eine verstärkte Änderung eines Energiepreises und/oder eine Versorgungsänderung infolge großer Abweichungen von dem prognostizierten Wetter vorliegt.

12. Verfahren nach Anspruch 1, wobei Messwerte über einen Sub-Lastaggregationspunkt hinweg analysiert werden, um Änderungen eines Energiepreises unter Verwendung einer Kombination von Messwerten vorherzusagen, die Folgendes umfassen: Daten, die eine allmähliche Verringerung des Sonnenlichts von Ost nach Wert über einen Sub-Lastaggregationspunkt hinweg zeigen, Daten, die einen Tag zeigen, der heißer als von einer Prognose vorhergesagt wurde, und Daten die über ein gesamtes Netzwerk hinweg verzögerte Spannungspegel zeigen.

13. Elektrisches Bedarfssystem mit verteilten Ressourcen zum Vorhersagen bevorstehender Energieereignisse in einem elektrischen Netz, wobei das System Folgendes umfasst:
ein verteiltes Netzwerk, das mit dem elektrischen Netz verbunden ist;
einen oder mehrere Prozessoren; und
eine Speichervorrichtung, die einen Satz von Anweisungen speichert, die, wenn sie von dem einen oder den mehreren Prozessoren ausgeführt werden, den einen oder die mehreren Prozessoren veranlassen:
Daten von einem Netzwerk verteilter Ressourcen, die Steuersysteme und/oder Sensoren umfassen, zu empfangen, wobei die empfangenen Daten in einer oder mehrerer Speichervorrichtungen gespeichert werden;
unter Verwendung des einen oder der mehreren Prozessoren eine Analyse der in der einen oder den mehreren Speichervorrichtungen gespeicherten empfangenen Daten vorzunehmen;
Bedingungen im elektrischen Netz an einem Sub-Lastaggregationspunkt des elektrischen Netzes zu modellieren;
einen Wert von gespeicherter Energie, Energieerzeugung und Lasteinschränkung vor Marktsignalen unter Verwendung der modellierten Bedingungen im elektrischen Netz zu bestimmen;
Bedarfspreisbestimmungs-Verteilungsereignisse vorherzusagen und Änderungen von Preis, Versorgung oder beidem zu prognostizieren; und
eine Veränderung des elektrischen Verbrauchs basierend auf dem vorhergesagten Bedarfspreisbestimmungs-Verteilungsereignis auszuführen;
**dadurch gekennzeichnet, dass** der Satz von Anweisungen, wenn er von dem einen oder den mehreren Prozessoren ausgeführt wird, ferner den einen oder die mehreren Prozessoren veranlasst:
Messwerte von den Sensoren in den Knoten über einen Sub-Lastaggregationspunkt hinweg heranzuziehen und eine Verringerung des verfügbaren Sonnenlichts, eine Größenordnung der Verringerung über eine gesamte Region hinweg und eine Geschwindigkeit und eine Richtung, mit der sich die Verringerung ausbreitet, unter Verwendung der Sensormesswerte vorherzusagen; und
die Netzspannung zu überwachen, um Netzeinschränkungen, Bedarfsreaktionsereignisse, einen erhöhten Echtzeit-Energiepreis oder Kombinationen davon vorherzusagen, wobei historische Daten in Verbindung mit Echtzeitdaten verwendet werden, um einen Netzspannungsabfall an einem einzelnen Ort von einem Netzspannungsabfall, der sich auf einen gesamten Sub-Lastaggregationspunkt auswirkt, zu trennen.

14. System nach Anspruch 13, wobei die Datenmeldung zeigt, wie viel Sonnenlicht in einer gegebenen Region gemessen wird, und wobei die Sonnenlichtdatenmeldung basierend auf der Sensorverteilung eine Bestimmung ermöglicht, dass Sonnenlicht in einer spezifischen Richtung mit der Zeit abnimmt.

15. System nach Anspruch 13, wobei an einem einzelnen Standort ein Spannungsabsinken infolge sehr hoher lokaler Last an dem physischen Ort eines Standorts relativ zu einer Umspannstation oder Kombinationen davon auftritt.

## Revendications

1. Un procédé de recueil et d'analyse de données à partir de ressources distribuées dans un système de demande électrique de ressources distribuées de façon à prédire des événements d'énergie à venir sur un réseau électrique, le procédé comprenant :
le recueil de données à partir d'un réseau de ressources distribuées qui comprend des systèmes de commande et des capteurs, les données recueillies étant conservées en mémoire dans un ou plusieurs dispositifs à mémoire,
l'exécution, au moyen d'un ou de plusieurs processeurs, d'une analyse sur les données recueillies conservées en mémoire dans les un ou plusieurs dispositifs à mémoire,
la modélisation de conditions de réseau électrique au niveau d'un point d'agrégation de sous-charge du réseau électrique,
la détermination de valeurs d'une énergie stockée, d'une génération d'énergie et d'une réduction de charge en avance de signaux du marché au moyen des conditions de réseau électrique modélisées,
la prédiction d'un événement de distribution de fixation de prix à la demande et la prévision d'une modification dans le prix, la fourniture ou les deux, et
l'exécution d'une modification de la consommation électrique en fonction de l'événement de distribution de fixation de prix à la demande prédit,
**caractérisé en ce que**
le système de demande électrique de ressources distribuées prend des mesures à partir des capteurs dans les noeuds sur un point d'agrégation de sous-charge et prédit une réduction de lumière du soleil disponible, une étendue de la réduction sur une région entière et une vitesse et une direction auxquelles la réduction s'étend au moyen des mesures de capteur, et
le procédé comprend en outre la surveillance d'une tension de ligne de façon à prédire des contraintes de réseau, des événements de réponse à la demande, un prix de l'énergie en temps réel accru, ou des combinaisons de ceux-ci, où des données d'historique sont utilisées conjointement avec des données en temps réel de façon à distinguer une chute de tension de ligne au niveau d'un site unique d'une chute de tension de ligne qui impacte la totalité d'un point d'agrégation de sous-charge.

2. Le procédé selon la Revendication 1, où les données recueillies à partir du réseau distribué de systèmes de commande et/ou de capteurs comprend des données de tension, des données de fréquence, des données de puissance, des données de température, ou des combinaisons de celles-ci.

3. Le procédé selon la Revendication 1, où l'analyse des données recueillies est exécutée en temps réel.

4. Le procédé selon la Revendication 1, où les données recueillies sont conservées en mémoire au niveau d'un serveur central.

5. Le procédé selon la Revendication 4, où l'analyse des données recueillies est exécutée dans le serveur central.

6. Le procédé selon la Revendication 1, où les données recueillies sont conservées en mémoire dans les ressources distribuées.

7. Le procédé selon la Revendication 4, où l'analyse des données recueillies est exécutée dans les ressources distribuées.

8. Le procédé selon la Revendication 1, où les capteurs comprennent un capteur de température, un capteur de tension, un capteur de lumière, un capteur d'humidité, un capteur de puissance, ou des combinaisons de ceux-ci.

9. Le procédé selon la Revendication 1, où le compte-rendu de données indique la quantité de lumière du soleil qui est mesurée dans une région donnée, et où, en fonction de la distribution des capteurs, le compte-rendu de données de lumière du soleil permet de déterminer que la lumière du soleil diminue dans une direction spécifique au fil du temps.

10. Le procédé selon la Revendication 1, où une baisse soudaine de tension de ligne a lieu au niveau d'un site individuel du fait d'une charge locale très élevée à un emplacement physique d'un site par rapport à une sous-station, ou des combinaisons de ceux-ci.

11. Le procédé selon la Revendication 1, comprenant en outre :
la comparaison de températures effectives et de données de lumière du soleil recueillies à partir du réseau de ressources distribuées en temps réel à des données météo prévues, et
la détermination s'il existe une modification élevée d'un prix de l'énergie et/ou une modification de la fourniture du fait d'écarts importants à partir des données météo prévues.

12. Le procédé selon la Revendication 1, où des mesures sur un point d'agrégation de sous-charge sont analysées de façon à prédire des modifications dans un prix de l'énergie au moyen d'une combinaison de mesures qui comprennent : des données illustrant une réduction graduelle de la lumière du soleil d'est en ouest sur un point d'agrégation de sous-charge, des données illustrant une journée qui est plus chaude qu'une prévision et des données illustrant des niveaux de tension décalés sur un réseau entier.

13. Un système de demande électrique de ressources distribuées destiné à la prédiction d'événements d'énergie à venir sur un réseau électrique, le système comprenant :
un réseau distribué qui s'interface avec le réseau électrique,
un ou plusieurs processeurs, et
un dispositif à mémoire conservant en mémoire un ensemble d'instructions qui, lorsqu'elles sont exécutées par les un ou plusieurs processeurs, amènent les un ou plusieurs processeurs à :
recevoir des données à partir d'un réseau de ressources distribuées qui comprennent des systèmes de commande et/ou des capteurs, les données reçues étant conservées en mémoire dans un ou plusieurs dispositifs à mémoire,
exécuter, au moyen des un ou plusieurs processeurs, une analyse des données reçues conservées en mémoire dans les un ou plusieurs dispositifs à mémoire,
modéliser des conditions de réseau électrique à un point d'agrégation de sous-charge du réseau électrique,
déterminer une valeur d'énergie stockée, une génération d'énergie et une réduction de charge en avance de signaux du marché au moyen des conditions de réseau électrique modélisées, et
prédire des événements de distribution de fixation de prix à la demande et des modifications de prévision de prix, de fourniture, ou des deux, et
exécuter une modification dans la consommation électrique en fonction de l'événement de distribution de fixation de prix à la demande prédit,
**caractérisé en ce que** l'ensemble d'instructions, lorsqu'elles sont exécutées par les un ou plusieurs processeurs, amènent en outre les un ou plusieurs processeurs à :
prendre des mesures à partir des capteurs dans les noeuds sur un point d'agrégation de sous-charge et prédire une réduction de lumière du soleil disponible, une étendue de la réduction sur une région entière et une vitesse et une direction auxquelles la réduction s'étend au moyen des mesures de capteur, et
surveiller une tension de ligne de façon à prédire des contraintes de réseau, des événements de réponse à la demande, un prix de l'énergie en temps réel accru, ou des combinaisons de ceux-ci, où des données d'historique sont utilisées conjointement avec des données en temps réel de façon à distinguer une chute de tension de ligne à un site unique d'une chute de tension de ligne qui impacte la totalité d'un point d'agrégation de sous-charge.

14. Le système selon la Revendication 13, où le compte-rendu de données indique la quantité de lumière du soleil qui est mesurée dans une région donnée, et où, en fonction de la distribution des capteurs, le compte-rendu de données de lumière du soleil permet de déterminer que la lumière du soleil diminue dans une direction spécifique au fil du temps.

15. Le système selon la Revendication 13, où une baisse soudaine de tension de ligne a lieu à un site individuel du fait d'une charge locale très élevée à un emplacement physique d'un site par rapport à une sous-station, ou des combinaisons de ceux-ci.
